# EUROPÄISCHE PATENTSCHRIFT

(11) **EP 0 400 765 B1**
(45) Veröffentlichungstag und Bekanntmachung des Hinweises auf die Patenterteilung: **24.02.1993**
(21) Anmeldenummer: 90250109.7
(22) Anmeldetag: 27.04.1990
(51) Int. Cl.: B23Q 35/10, B27C 5/00, B23Q 1/14

(54) **Längskopierfräsmaschine**
Copying machine for milling the edges of an oblong workpiece
Machine à copier les bords longitudinaux d'une pièce par fraisage

(30) Priorität: 02.05.1989 DE 3914973
(43) Veröffentlichungstag der Anmeldung: 05.12.1990
(73) Patentinhaber: Dimter GmbH Maschinenfabrik, D-89257 Illertissen (DE)
(72) Erfinder: Fröhlich, Adolf, Dipl.-Ing., D-7919 Altenstadt Filzingen (DE)
(74) Vertreter: Maikowski, Michael, Dipl.-Ing. Dr.

(56) Entgegenhaltungen:
- EP-A- 0 281 998
- DE-A- 1 502 690
- DE-A- 1 652 386
- DE-A- 3 218 107
- DE-A- 3 535 875
- DE-C- 43 797
- FR-A- 2 302 175
- FR-A- 2 302 175
- US-A- 1 939 580
- US-A- 4 290 237
- US-A- 4 420 911

## Beschreibung

Die Erfindung betrifft eine Längskopierfräsmaschine nach dem Oberbegriff des Anspruchs 1.

Aus der DE 19 95 328 U1 ist eine Längskopierfräsmaschine nach dem Oberbegriff des Hauptanspruchs bekannt, mit der die Seitenkanten langgestreckter ebener Gegenstände bearbeitet werden können. Weisen langgestreckte Gegenstände eine Wölbung oder Krümmung auf, können, da mit Längskopierfräsmaschinen ein Profilieren nur in der Tischebene möglich ist, deren Seiten nur mit zylindrischen Werkzeugen bearbeitet werden. Diese zylindrischen Werkzeuge müssen die Höhe des Bogens haben, den das Werkstück überspannt. Bei dieser Bearbeitung entstehen an der Außenkontur Verzerrungen und außerdem scharfe Kanten, die durch eine anschließende Nachbearbeitung beseitigt werden müssen.

Es sind bereits Spezialmaschinen zum Profilfräsen und Profilschleifen kreisbogenförmig gekrümmter Teile bekannt. Diese Maschinen weisen einen rotierenden kreiszylindrischen Maschinentisch auf, auf dessen Stirnfläche das kreisförmig gebogene Werkstück aufgespannt wird. Der Durchmesser des Aufspannrundtisches entspricht dem Krümmungsradius des Werkstückes. Das Werkzeug führt eine senkrecht zur Stirnfläche des Rundtisches erfolgende Kopierbewegung durch. Werkstücke mit unterschiedlichen Krümmungsradien können nur bei geringen Abweichungen des Krümmungsradius bearbeitet werden. Darüberhinaus kann auf dieser, verhältnismäßig teuren Spezialmaschine nur ein Seitenkantenabschnitt bei einem Arbeitsgang profiliert werden. Um beide Schmalseiten eines langgestreckten gebogenen Werkstückes in einer derartigen Maschine zu bearbeiten, ist ein zeit aufwendiger zweiter Arbeitsgang erforderlich.

Es sind außerdem CNC-gesteuerte Maschinen mit einer Mehrachsensteuerung bekannt. Mit diesen Maschinen können zum Kopierfräsen gekrümmter, langgestreckter Werkstücke die erforderlichen dreidimensionalen Bewegungen der Werkzeuge gesteuert und ausgeführt werden. Bei diesen Maschinen ist jedoch jeweils an einem Werkstück nur ein Werkzeug im Einsatz. Deshalb können auf diesen aufwendigen CNC-gesteuerten Maschinen nicht gleichzeitig an einem Werkstück zwei gegenüberliegende, unterschiedlich geformte Schmalseiten bearbeitet werden. Dadurch werden die Bearbeitungszeiten an solchen Maschinen, die ein hohes Investitionskapital erfordern, erheblich verlängert.

Aus der DE-AS 19 38 225 ist eine Vorrichtung zum Fräsen von Wölbungen mit großem Radius bekannt. Diese Vorrichtung weist eine sogenannte Waagerecht-Fräsmaschine mit horizontaler Spindel und horizontalem Aufspanntisch auf.

Es sind zwei auf dem Aufspanntisch aufspannbare, gewölbte Schienen vorgesehen, an denen ein Auflagetisch mit die Schienen umgreifenden Nuten hin- und herbeweglich geführt ist. Seitenkanten eines gewölbten Gegenstandes können mit einer derartigen Maschine nicht gefräst werden. Aus der DE 35 26 950 C1 ist eine Fräseinrichtung zum Bearbeiten der Kanten von Blechplatten oder Blechbändern bekannt. Diese Fräseinrichtung weist eine Spannvorrichtung für die Blechplatten oder Blechbänder auf, die mit einzelnen, gegen das Werkstück anstellbaren Rollen ausgerüstet ist.

Der Erfindung liegt die Aufgabe zugrunde, eine Längskopierfräsmaschine der eingangs genannten Art so weiterzubilden, daß sie in einfacher Weise zur Bearbeitung sowohl nicht gekrümmter als auch gekrümmter langgestreckter Gegenstände geeignet ist und dementsprechend auch bereits im Einsatz befindliche Längskopierfräsmaschinen nachgerüstet werden können.

Erfindungsgemäß wird diese Aufgabe durch die sich aus den Merkmalen des Patentanspruchs 1 ergebende technische Lehre gelöst.

Erfindungsgemäß wird eine Anpassung an die bekannte Längskopierfräsmaschine dadurch erreicht, daß der Gegen stand mit seiner abwickelbar gekrümmten Oberfläche an einer komplementär an diese angepaßten Werkstückaufspannfläche eines Werstücksträgerschlittens festlegbar ist. Dieser Werkstückträgerschlitten kann, wie es bei der Längskopierfrästechnik üblich ist, translatorisch in eine Frässtation eingeführt werden. Nach dieser Einführung wird dann der Werkstückträgerschlitten mit einer Rotationsbewegung um eine zur Zustellrichtung des oder der Fräswerkzeuge parallelen Achse durch die Station hindurchgeführt. Diese Rotationsbewegung macht es möglich, daß aus der Ebene fortlaufende Kanten eines gewölbten oder gebogenen langgestreckten Gegenstandes durch Fräsen profiliert werden können. Diese Rotationsbewegung des Schlittens erlaubt es, daß beim Durchfahren der Frässtation der zu bearbeitende Abschnitt der Seitenkanten immer in Eingriff mit dem Fräszeug gehalten werden kann.

Um den Werkstückträgerschlitten sicher auf der Schlittenführung zu führen, weist die Führungsfläche des Schlittens ein Führungselement auf, das in eine in der Führungsbahn der Schlittenführung ausgebildete Führungsnut eingreift. Dieses Führungselement kann stiftförmig oder stegförmig ausgebildet sein. Beispielsweise können mehrere Stifte mit oder ohne Rollen vorgesehen sein, die in die Führungsnut eingreifen und somit bei einer Bewegung des Werkstückträgerschlittens eine Querkomponente dieser Bewegung sicher verhindern.

Zur Hin- und Herbewegung des Werkstückträgerschlittens auf der Schlittenführung ist mit Vorteil am Rahmen ein pneumatischer oder hydraulischer Arbeitszylinder befestigt.

Ein Ausführungsbeispiel der Erfindung ist in der folgenden Beschreibung unter Bezugnahme auf die Figuren der Zeichnung erläutert.

Es zeigen:
Fig. 1 eine schematische Seitenansicht einer Längskopierfräsmaschine,
Fig. 2 eine schematische Ansicht der Längskopierfräsmaschine, gesehen in Durchlaufrichtung durch die Bearbeitungsstationen
   und
Fig.3A-3D schematische Darstellungen einiger Betriebsphasen der erfindungsgemäßen Längskopierfräsmaschine.

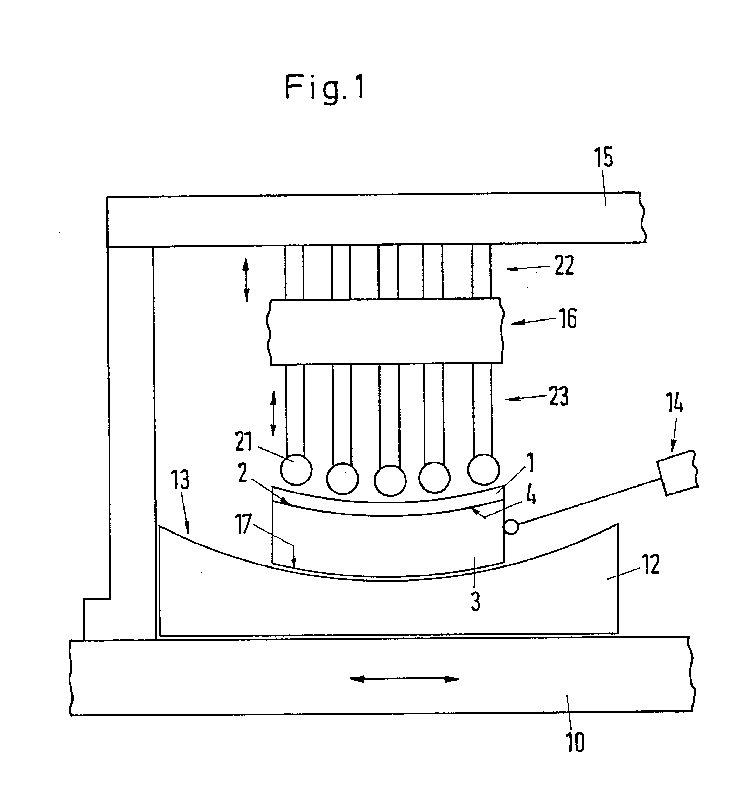

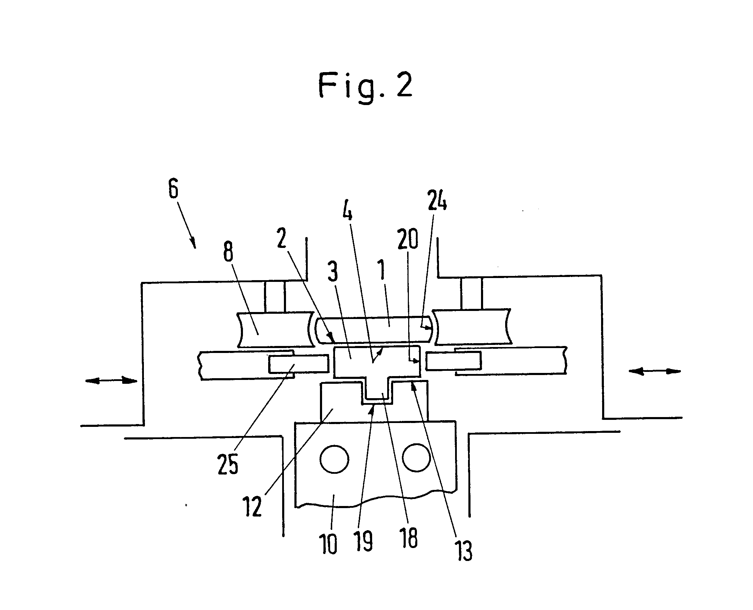

In den Figuren 1 und 2 ist schematisch der Längsschlitten 10 einer Längskopierfräsmaschine dargestellt. Bei der Darstellung in Fig. 2 bewegt sich dieser Längsschlitten 10 senkrecht zur Zeichenebene und wird in einem schematisch angedeuteten Maschinenbett geführt. Auf diesem Längsschlitten 10 ist eine Schlittenführung 12 montiert. Diese Schlittenführung 12 ist ein Block, der eine Führungskurvenbahn 13 aufweist. Beim dargestellten Ausführungsbeispiel ist diese Führungskurvenbahn 13 als Kreiszylindermantelabschnitt ausgebildet.

Auf dieser Schlittenführung 12 ist ein Werkstückträgerschlitten 3 angeordnet, der eine Schlittenführungsfläche 17 aufweist, mit der der Werkstückträgerschlitten 3 satt auf der Führungskurvenbahn 13 der Schlittenführung 12 sitzt. Mittels eines in Fig. 1 schematisch dargestellten Arbeitszylinders 14 ist der Werkstückträgerschlitten 3 längs der Führungskurvenbahn 13 auf der Schlittenführung 12 hin und her beweglich. In einer Anfangsstellung befindet sich der Werkstückträgerschlitten 3 mit seiner rechten Stirnseite am rechten Ende der Führungskurvenbahn 13, wie es schematisch in Fig. 3 A gezeigt ist.

Bei der Darstellung in Fig. 1 befindet sich der Werkstückträgerschlitten 3 in einer mittleren Arbeitsstellung.

Wie schematisch in Fig. 1 dargestellt, ist die Schlittenführung 12 mit einem Rahmen 15 verbunden, der diese Schlittenführung 12 überspannt. In den Figuren 1 und 2 ist dieser Rahmen 15 lediglich schematisch angedeutet. An einem oberen Träger dieses Rahmens 15 ist, wie schematisch in Fig. 1 angedeutet, eine Werkstücktspannvorrichtung 16 relativ zum Rahmen 15 heb- und senkbar montiert.

Wie Fig. 1 zeigt, ist die Werkstückspannvorrichtung 16 an schematisch dargestellten Hubzylindern 22 heb- und senkbar montiert. An dieser Werkstückspannvorrichtung 16 sind an Zustellzylindern 23 Andruckrollen 21 montiert. Die Ausbildung der Werkstückspannvorrichtung 16 ist vorzugsweise derart, daß die Andruckrollen 21 mit dem Werkstückträgerschlitten 3 über dessen gesamte Bewegungsbahn hinweg zusammenarbeiten können. Der in Fig. 1 dargestellte Arbeitszylinder 14 ist an einem nicht dargestellten Abschnitt des Rahmens 15 montiert. Die Ausbildung ist derart, daß bei einer Betätigung des Arbeitszylinders 14 der Werkstückträgerschlitten 3 auf der Führungskurvenbahn 13 aus einer Endstellung in die andere verfahren werden kann.

Der Werkstückträgerschlitten 3 weist eine Werkstückaufspannfläche 4 auf. Auf diese Aufspannfläche 4 ist, wie die Figuren 1, 2 und 3A zeigen, ein langgestrecktes, gebogenes Werkstück 1 aufgelegt. Dieses Werkstück 1 weist eine abwickelbar gekrümmte Oberfläche 2 auf. Unter einer abwickelbar gekrümmten Oberfläche ist im Sinne der Differenzialgeometrie eine Regelfläche zu verstehen, die auf eine Ebene abgewickelt werden kann. Die Werkstückaufspannfläche 4 des Werkstückträgerschlittens 3 ist komplementär zu der abwickelbar gekrümmten Oberfläche 2 des langgestreckten Gegenstandes 1 ausgebildet, so daß dieser langgestreckte Gegenstand mit Paßsitz auf den Werkstückträgerschlitten 3 aufgelegt werden kann.

Damit der Werkstückträgerschlitten 3 auf der Schlittenführung 12 auch in Querrichtung geführt werden kann, weist der Werkstückträgerschlitten 3 an seiner Schlittenführungsfläche 17 ein Führungselement 18 auf. Beim dargestellten Ausführungsbeispiel hat dieses Führungselement 18 die Form eines vorspringenden Steges. Dieser Steg kann beispielsweise auch die Form eines Schwalbenschwanzes haben.

Das Führungselement 18 kann auch als eine Reihe von Führungszapfen mit oder ohne Rollen ausgebildet sein.

In der Führungskurvenbahn 13 der Schlittenführung 12 ist, wie Fig. 2 zeigt, eine Führungsnut 19 ausgebildet, in die das Führungselement 18 eingreift.

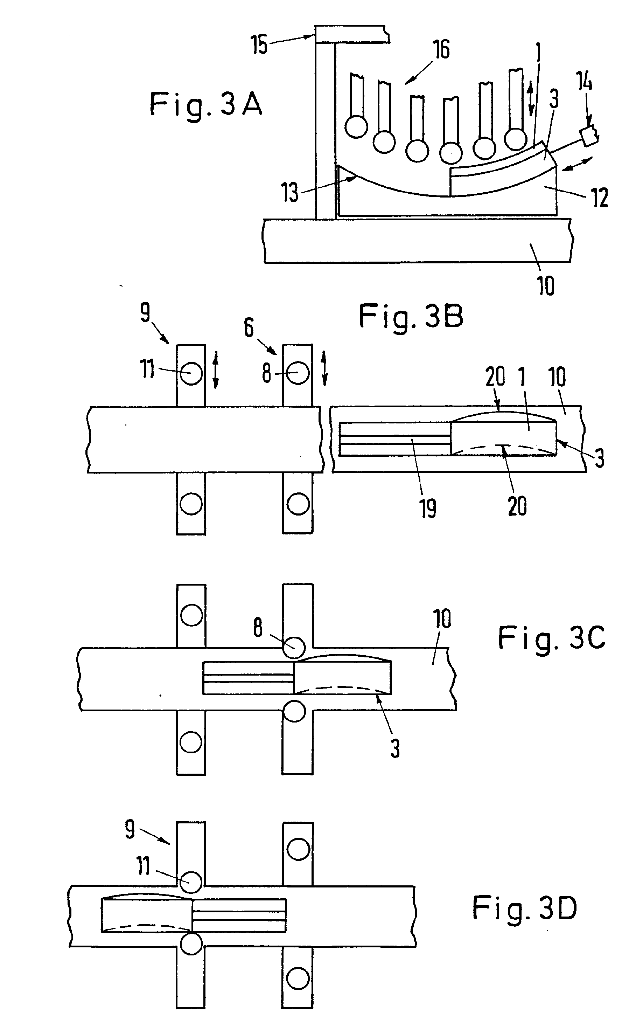

Die in den Figuren 2 und 3 B - 3 D dargestellten Seitenflanken 20 des Führungsschlittens 3 sind als Kopierschablonen für den Fräsvorgang bzw. als Steuerschablonen für den Schleifvorgang ausgebildet.

Bei der Darstellung in Fig. 2 ist die in den Figuren 3 B - 3 D gezeigte Frässtation 6 schematisch angedeutet. Es sind auf beiden Seiten des Längsschlitten 10 Kopierfrässpindeln 8 angeordnet. Diese Kopierfrässpindeln 8 können an Fräsköpfen, wie durch Pfeile angedeutet, in der Zeichenebene hin- und herbewegt werden. Mit diesen Kopierfrässpindeln 8 werden die Seitenkanten 24 des Gegenstandes 1 bearbeitet. Die Bewegung der Kopierfrässpindeln 8 auf den Gegenstand zu und von diesem fort werden in an sich bekannter Weise von Kopierrollen 25 gesteuert. Die Steuerung von Kopierfräswerkzeugen über Kopierrollen bzw. Kopierstifte, die mit Kopierschablonen in Eingriff gelangen, ist an sich bekannt. Der Aufbau der Frässtationen 6 ist der übliche und soll zur Vereinfachung der Darstellung nicht näher erläutert werden. Es sei lediglich bemerkt, daß, wie Fig. 2 zeigt, beim Durchgang des Werkstückträgerschlittens 3 durch eine Frässtation 6 die Kopierrollen 25 sich gegen die, als Schablonen ausgebildeten Seitenflanken 20 des Werkstückträgerschlittens 3 anlegen, so daß durch die Vorschubbewegung des Werkstückträgerschlittens 3 gleichzeitig die Zustellbewegung der Kopierfrässpindeln 8 gesteuert wird.

Wie Fig. 3 A zeigt, wird bei abgehobener Werkstückspannvorrichtung 16 und Stellung des Werkstückträgerschlittens 3 in seiner rechten Endlage auf der Schlittenführung 12 der zu fräsende Gegenstand 1 auf den Werkstücktragerschlitten 3 aufgelegt. Danach werden die Andruckrollen 21 in Anlage gegen die Oberseite des Gegenstandes 1 gebracht. Die Schlittenführung 12 wird auf dem Längsschlitten 10 vorzugsweise im Schnellgang in die Frässtation 6 eingefahren. Beim Einfahren befinden sich die Kopierfrässpindeln 8 wie schematisch in Fig. 3 B dargestellt, in der zurückgezogenen Stellung. Sobald die Schlittenführung 12 mit dem Werkstückträgerschlitten 3 die schematisch in Fig. 3 C darge stellte Arbeitsstellung erreicht hat, wird der Längsschlitten 10 abgestoppt. Die Kopierfrässpindeln 8 werden in die Arbeitsstellung gefahren und der Antrieb 14 wird betätigt. Durch die Betätigung des Antriebes wird der Werkstückträgerschlitten 3 auf der Schlittenführung 12 an das linke Ende verfahren und dabei erfolgt das Fräsen, wobei die Steuerung über die Flanken 20 erfolgt. Nach dem Fräsen befindet sich der Schlitten in seiner linken Endstellung auf der Schlittenführung 12. In der Schleifstation 9, die die übliche Ausbildung hat und deren Schleifwerkzeuge 11 ebenfalls durch Arbeitsschablonen gesteuert werden, die an den Flanken 20 des Werkstückträgerschlittens 3 ausgebildet bzw. die gleichen Schablonen, wie sie zum Fräsen verwendet werden sind, wird ein Schleiarbeitsgang durchgeführt.

Die Schleifwerkzeuge 11 befinden sich in der in Fig. 3 C schematisch dargestellten zurückgezogenen Stellung. Die Schlittenführung 12 wird im Schnellgang durch die Schleifstation 9 translatorisch auf dem Längsschlitten 10 hindurchgefahren und befindet sich vor dem Schleifen in der in Fig. 3 D dargestellten Stellung, in der die Schleifwerkzeuge 11 angelegt sind. Der Längsschlitten 10 wird abgestoppt und der Antrieb 14 betätigt, um den Werkstückträgerschlitten 3 durch die Schleifstation 9 hindurch in seine rechte Endstellung auf der Schlittenführung 12 zu bringen. Diese Endstellung entspricht der in Fig. 3 A dargestellten Beschickungsstellung. Nach dem Schleifen wird dann der Werkstückträgerschlitten 3 im Schnellgang auf dem Längsschlitten 10, in die in den Figuren 3 A und 3 B dargestellte Ausgangsstellung zurückgeführt.

## Patentansprüche

1. Längskopierfräsmaschine in derem Maschinenbett ein Längsschlitten hin- und herbewegbar geführt ist, deren Kopierfrässpindeln eine Kopierbewegung parallel zur Ebene der Längsschlittenbewegung durchführen und deren Längsschlitten eine Werkstückspannvorrichtung überspannt
gekennzeichnet durch
eine auf dem Längsschlitten (10) angeordnete Schlittenführung (12) mit einer kreiszylinderförmigen Führungsbahn (13), deren Krümmungsmittelachse oberhalb des Längsschlittens (10) parallel zur Kopierbewegungsrichtung der Kopierfrässpindeln (8) verläuft und auf der ein Werkstückträgerschlitten (3) mittels eines Antriebs (14) hin- und herbewegbar geführt ist, der eine, zu einer abwickelbar, gekrümmten Oberfläche eines langgestreckten, gewölbten oder gebogenen Gegenstandes (1) komplementäre Werkstückaufspannfläche (4) aufweist, an der der Gegenstand (1) mittels der Spannvorrichtung (21, 23) festspannbar ist.

2. Längskopierfräsmaschine nach Anspruch 1,
dadurch gekennzeichnet, daß
die Schlittenführungsfläche (17) des Werkstückträgerschlittens (3) auf der Führungsbahn (13) ein Führungselement (18) aufweist, das in eine, in der Führungsbahn (13) der Schlittenführung (12) ausgebildete Führungsnut (19) eingreift.

3. Längskopierfräsmaschine nach einem der Ansprüche 1 oder 2,
dadurch gekennzeichnet, daß
der Antrieb (14) ein an einem, den Werkstückträgerschlitten (3) überspannenden Rahmen (15) montierter Abreitszylinder ist.

## Claims

1. Length-copying milling machine whose machine bed contains a longitudinal slide carriage which is guided to and fro wherein the copying milling spindles carry out a copying movement parallel to the plane of movement of the longitudinal slide carriage and wherein said longitudinal slide carriage spans a workpiece tension device
characterised by a carriage guide (12) mounted on the longitudinal slide carriage (10) and provided with a circular cylindrical guide path (14) whose centre axis of curvature runs above the longitudinal slide carriage (10) parallel to the direction of the copying movement of the copying milling spindles (8), and on which a workpiece holder slide carriage (3) is guided to and fro by means of a drive (14) wherein the workpiece holder slide carriage has a workpiece clamping face (4) which is complementary with a rollable curved surface of an elongated, arched or bent object (1), wherein the object (1) can be firmly clamped on the workpiece clamping face by means of the tension device (21,23).

2. Length-copying milling machine according to claim 1
characterised in that the slide carriage guide face (17) of the workpiece support carriage (3) has on the guide path (13) a guide element (18) which engages in a guide groove (19) formed in the guide path (13) of the slide carriage guide (12).

3. Length-copying milling machine according to one of claims 1 or 2
characterised in that the drive (14) is a work cylinder mounted on a frame (15) spanning the workpiece support slide carriage (3).

## Revendications

1. Fraiseuse à copier longitudinale dans le banc de laquelle est monté mobile en va-et-vient un chariot longitudinal dont les broches de fraisage à copier effectuent un mouvement de copiage parallèle au plan du mouvement du chariot longitudinal et dont le chariot longitudinal est face à un dispositif de serrage de pièce,
caractérisée par un guide de chariot (12) monté sur le chariot longitudinal (10), comprenant une piste de guidage en forme de surface cylindrique circulaire (13), dont l'axe central de courbure est situé au-dessus du chariot longitudinal (10) parallèlement à la direction du mouvement de copiage des broches de fraisage à copier (8) et sur laquelle est monté mobile en va-et-vient un chariot support de pièce (3) au moyen d'un entraînement (14) et qui comprend une surface de serrage de pièce (4) complémentaire d'une surface courbe pouvant être développée d'un objet en longueur, courbe ou incurvé, sur laquelle l'objet (1) peut être maintenu au moyen du dispositif de serrage (21, 23).

2. Fraiseuse à copier longitudinale selon la revendication 1, caractérisée en ce que la surface de guidage (17) du chariot support de pièce (3) comprend sur la piste de guidage (13) un élément de guidage (18) qui pénètre dans une rainure te guidage (19) constituée dans la piste de guidage (13) du guide de chariot (12).

3. Fraiseuse à copier longitudinale selon la revendication 1 ou 2, caractérisée en ce que l'entraînement (14) est constitué par un vérin de travail monté sur un châssis (15) surplombant le chariot support de pièce (3).
